Europäisches Patentamt

European Patent Office

Office européen des brevets

(19)

(11) Numéro de publication : **0 399 925 B1**

(12) **FASCICULE DE BREVET EUROPEEN**

(45) Date de publication du fascicule du brevet :
02.12.92 Bulletin 92/49

(51) Int. Cl.⁵ : **B23Q 17/24,** B23Q 17/22,
G01B 11/27

(21) Numéro de dépôt : **90420228.0**

(22) Date de dépôt : **15.05.90**

(54) **Machine pour usiner la culasse d'un moteur thermique.**

(30) Priorité : **23.05.89 FR 8906976**

(43) Date de publication de la demande :
**28.11.90 Bulletin 90/48**

(45) Mention de la délivrance du brevet :
**02.12.92 Bulletin 92/49**

(84) Etats contractants désignés :
**CH DE ES FR GB IT LI SE**

(56) Documents cités :
**DE-A- 2 758 742
DE-B- 2 343 209
JP-A- 5 890 437
JP-A- 5 919 656
JP-A-56 108 905
US-A- 3 635 108
US-A- 3 646 838
US-A- 4 172 665**

(73) Titulaire : **SERDI - SOCIETE D'ETUDES DE
REALISATION ET DE DIFFUSION
INDUSTRIELLES
Avenue des Vieux Moulins 23
Annecy (FR)**

(72) Inventeur : **Leroux, Jacques
29 rue du Grand Essert
F-74940 Annecy-le-Vieux (FR)**
Inventeur : **Gallez, François
9 quater Avenue d'Albigny
F-74000 Annecy (FR)**

(74) Mandataire : **Guerre, Dominique et al
Cabinet Germain et Maureau 20 Boulevard
Eugène Deruelle BP 3011
F-69392 Lyon Cédex 03 (FR)**

## Description

La présente invention concerne une machine pour usiner la culasse d'un moteur thermique, c'est-à-dire permettant d'aléser les deux paliers de l'arbre à came, et éventuellement surfacer le plan du joint de culasse.

On a déjà proposé de telles machines comprenant :

- un support ou bâti fixe
- une table pour le maintien de la culasse mobile par rapport au support, de façon qu'elle soit susceptible d'amener l'axe d'alésage en coïncidence avec la ligne d'avance de l'outil d'alésage défini ci-après, par exemple autour de trois axes orthogonaux formant un tièdre de référence
- un outil d'alésage travaillant selon une ligne d'avance constituée par l'axe de rotation de l'outil pendant l'alésage, et/ou un outil de surfaçage travaillant selon deux directions perpendiculaires déterminant un plan de référence ; cette ligne d'avance ou ce plan de référence étant fixé par construction par rapport au support.

Par des mécanismes appropriés de commande de la table, on amène la culasse en coïncidence avec la ligne d'avance ou le plan de référence, pour effectuer le travail d'usinage selon cette ligne ou dans ce plan.

La présente invention a pour objet une machine du type précité, faisant application d'un dispositif à visée optique, notamment à visée laser, de manière à améliorer la précision de l'usinage, tout en simplifiant l'utilisation d'une telle machine.

S'agissant de l'usinage ou du travail d'un métal, toutes sortes de solutions ou systèmes à visée laser ont déjà été proposés :

Ainsi, le document **US-C-4 172 665** concerne l'usinage d'un alésage dans un tube de poupe d'un bateau, avec un ensemble d'alésage comprenant un tube central d'alésage, des paliers de support sur ce dernier, un moteur, un outil de coupe, etc...

Le tube central d'alésage étant relativement long, et supportant des efforts en flexion, on propose selon ce document de centrer trois zones de support espacées dudit tube, sur une seule et même direction de référence, matérialisée par un faisceau laser, dirigé au centre du tube de poupe à aléser. Pour ce faire :

- au niveau de chaque zone de support, et à l'extérieur du tube, on prévoit un dispositif réglable de déplacement en translation dudit tube, selon deux directions orthogonales
- au niveau de chaque même zone de support, et à l'intérieur du tube, on prévoit un capteur dirigé selon l'axe de ce dernier
- chaque capteur génère un signal de mesure dont la valeur dépend de la position relative de la zone de support par rapport à la direction de référence du faisceau laser

- un système de traitement des différents signaux de mesure génère un signal de commande ou correction en position pour chaque zone de support du tube, selon les deux directions orthogonales, jusqu'à obtenir la coïncidence du centre de la zone de support avec le faisceau laser.

Le document **US-C-4 172 665** décrit donc un système d'alignement d'un tube, aux flexions intermédiaires près, sur une direction de référence.

De manière similaire, le document **US-C-3 635 108** concerne l'alésage du fût d'un canon, avec un tube central d'alésage comportant à son extrémité libre un outil de coupe. Pour les mêmes raisons que précédemment, tenant aux efforts apportés en flexion sur le tube d'alésage, on propose de centrer une seule zone de support adjacente à la tête d'usinage, sur une seule et même direction de référence, matérialisée par un faisceau laser dirigé au centre du fût du canon. Pour ce faire, on utilise des moyens identiques à ceux décrits précédemment, mais limités à une seule zone de support, le dispositif réglable de déplacement en translation du tube étant constitué par un servo-mécanisme hydraulique.

Le document **US-C-3 635 108** décrit donc un système d'alignement de la tête d'un tube d'alésage, sur une direction de référence.

D'ailleurs, de manière générale, s'agissant de l'alignement d'un tube ou d'un élément ou section tubulaire sur une direction de référence, matérialisée par un faisceau laser dirigé au centre d'une structure creuse ayant une forme sensiblement de révolution, des solutions comparables ont été montrées par :

- le document **JP-A-56 108 905**, qui dispose le capteur au niveau de l'émetteur, et prévoit un miroir de réflexion sur l'élément tubulaire
- le document **US-C-3 646 838**, qui permet d'aligner deux éléments tubulaires selon la même direction de référence, en disposant l'émetteur au centre d'un premier élément tubulaire, et le capteur au centre du second élément tubulaire
- le document **DE-B-2 758 742**, qui prévoit un tube creux pour le guidage en rotation d'un outillage d'usinage, ce tube creux étant aligné sur un faisceau laser dirigé au centre de plusieurs paliers d'un moteur thermique, espacés les uns des autres, déterminant ensemble une structure creuse virtuelle.

En outre, toujours avec des systèmes à visée optique, on sait aligner l'axe d'une structure creuse sensiblement de révolution, sur un axe de référence matérialisé par un faisceau lumineux.

Ainsi, selon le document **JP-A-59 19656**, on matérialise l'axe de la structure creuse par l'alignement de deux viseurs disposés au centre de cette dernière, à deux extrémités respectivement, et par déplacement de la structure creuse, on amène l'alignement des deux viseurs, en coïncidence avec le faisceau lumineux de référence.

Pour terminer, conformément au document **JP-A-58 90437**, on a proposé d'aligner l'axe d'usinage d'une tête d'alésage mobile verticalement et horizontalement, sur un faisceau de référence passant approximativement par le centre d'une pluralité de paliers espacés les uns des autres, appartenant à un moteur thermique. Pour ce faire, l'émetteur du faisceau de référence est disposé sur le bâti de la machine, tandis que le capteur du même faisceau est disposé à l'intérieur de la tête d'alésage.

S'agissant de l'orientation d'une table, par rapport à un support fixe, selon au moins trois degrés de liberté, selon le document **DE-B-2 343 209**, on a déjà proposé un dispositif comprenant un berceau sphérique permettant une orientation en tanguage autour d'un axe (X), et une coque sphérique sur laquelle est montée la table, permettant une orientation en roulis autour d'un axe (Z). Et le berceau et la coque sont fixés de manière réversible, dans l'orientation relative commandée par l'utilisateur, au moyen d'un dispositif à vis approprié.

Aucune des solutions examinées précédemment n'a envisagé spécifiquement l'usinage d'une culasse d'un moteur thermique, et tel est l'objet de la présente invention.

La présente invention a pour objet une machine pour usiner la culasse d'un moteur thermique, avec un système à visée optique spécifiquement adapté à l'alésage des deux paliers de l'arbre à came, et éventuellement au surfaçage du plan du joint de culasse, ce système demeurant d'une manipulation simple pour l'utilisateur, par exemple le réparateur.

Selon la présente invention, la machine intègre un système à visée optique, du type à visée laser, et à cet effet :

- deux émetteurs sont fixés sur le support de part et d'autre de la table de maintien de la culasse, et sont disposés l'un en face de l'autre pour émettre deux faisceaux lumineux respectivement alignés selon la ligne (X) d'avance de l'outil d'alésage

- deux capteurs amovibles sont agencés pour être disposés provisoirement, dans les deux paliers extrêmes respectivement, de part et d'autre de la culasse, en vis-à-vis des deux émetteurs respectivement, et sont alignés selon l'axe (X′) d'alésage, les deux capteurs générant deux signaux électriques de mesure, dont la valeur de chacun dépend de la position relative de l'image du faisceau de référence reçu par rapport au centre d'un dit capteur, et donc de l'orientation relative de l'axe d'alésage (X′) par rapport à la ligne (X) d'avance de l'outil d'alésage

- un système de traitement des deux signaux de mesure, générant un signal de commande en position de la table de maintien de la culasse, pour amener l'axe d'alésage (X′) en coïncidence avec la ligne d'avance (X) de l'outil d'alésage.

Grâce à l'invention, en disposant provisoirement le capteur sur la culasse dans l'axe d'alésage, il est donc possible d'amener en superposition ce dernier avec la ligne d'avance de l'outil d'alésage. En retirant le capteur, l'alésage pourra donc être effectué de manière précise selon la ligne d'arbre de la culasse.

La présente invention est maintenant décrite par référence à la réparation de culasses de moteurs thermiques, et plus précisément à l'alésage des paliers d'arbre à came, c'est à dire des logements de bagues ou des bagues formant ces derniers, d'une part, et au surfaçage du plan du joint de la culasse d'autre part.

Dans les dessins annexés :
- la figure 1 représente une vue d'ensemble et de face d'une machine conforme à l'invention
- la figure 2 représente le schéma de principe de la visée laser de la machine représentée à la figure 1, en association avec un outillage d'alésage pour les paliers d'arbre à came
- la figure 3 représente le schéma de principe de la visée laser de la machine représentée à la figure 1, en association avec un outillage de surfaçage pour le plan du joint de culasse
- la figure 4 représente de manière schématique le récepteur d'un capteur opto-électronique de visée laser, utilisé conformément à l'invention
- la figure 5 représente en perspective le schéma du principe du dispositif d'orientation de la table appartenant à la machine selon la figure 1, et permettant un mouvement de tanguage, roulis et lacet de ladite table, autour de trois axes formant un trièdre d'orientation

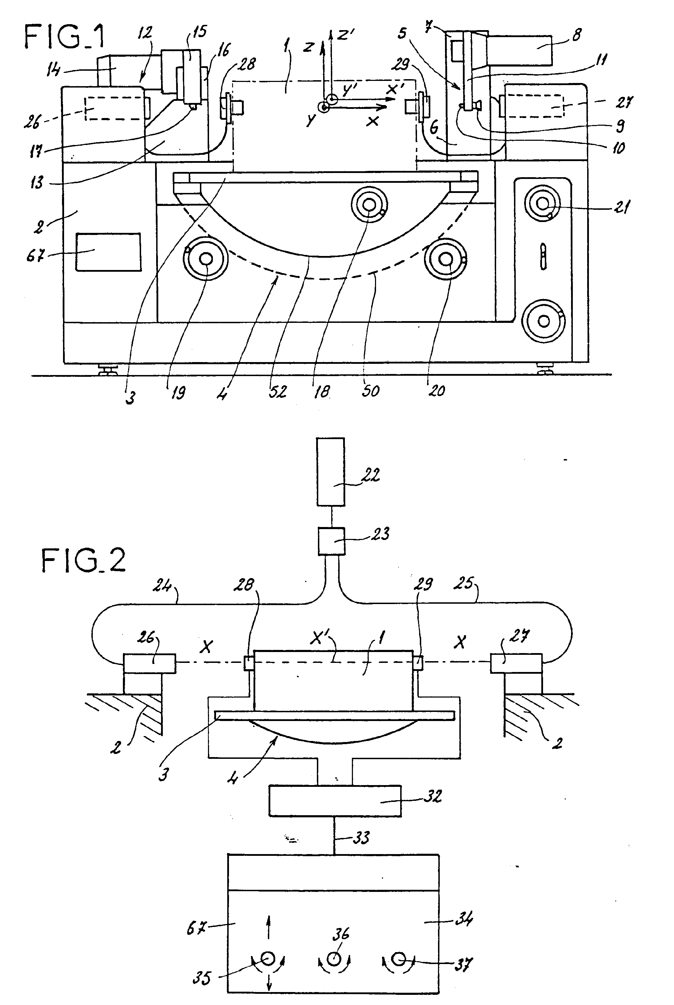

Selon la figure 1, la référence numérique (1) désigne une culasse d'un moteur thermique, dont on veut à la fois aléser selon l'axe (X′) la ligne d'arbre à came, et surfacer le plan du joint de culasse, selon le plan de surfaçage matérialisé par les axes (X′) et (Y′). Pour la suite, l'axe (X′) constituera donc la direction d'alésage, et le plan (X′Y′) le plan de surfaçage.

Cette machine, destinée à être posée sur une table, à hauteur d'homme pour sa manipulation et utilisation, comporte les éléments principaux suivants :
- un bâti ou support fixe (2)
- une table (3) pour le maintien à plat de la culasse (1), par des moyens de fixation amovible non représentés
- un dispositif (4) monté au centre du bâti (2), permettant à la fois, d'une part une orientation dans l'espace de la table (3), et donc de la culasse (1), autour de trois axes (X), (Y), (Z), formant un trièdre de référence, fixé par construction par rapport au bâti (2), et d'autre part un positionnement en hauteur selon l'axe de référence (Z) de la table (3) l'axe (X) est identique à la direction d'avance de l'outil d'alésage introduit ci-après
- un outil ou tête d'alésage (5), disposé d'un côté du support (2), par exemple à droite selon la figure 1, mobile selon la direction de référence (X) ; de manière connue en soi, cette tête d'alésage comprend un chariot (6) d'avance selon la direction (X), se déplaçant sur un rail non représenté, une colonne (7) de dégagement verticale pour passer de palier en palier, un moteur de coupe (8), une mini-broche horizontale (9) d'usinage selon la direction (X), équipée d'une plaquette d'alésage (10), et enfin une transmission (11) entre le moteur de coupe (8) et la broche (9)

- un outil ou tête de surfaçage (12), disposé de l'autre côté du bâti (2), c'est à dire à gauche selon la figure 1, déplaçable dans le plan de référence (X,Y), appelé ci-après plan d'usinage ; cette tête comprend de manière connue en soi, un chariot (13) pouvant se déplacer dans le plan d'usinage par des moyens non représentés, un moteur de coupe (14), un bras (15) portant un outil (16) de surfaçage consistant en un outil de coupe, le bras (15) étant supporté par le chariot d'avance (13), et enfin un coulisseau (17), permettant le recul du bras (15) pour dégager l'outil de coupe (16)

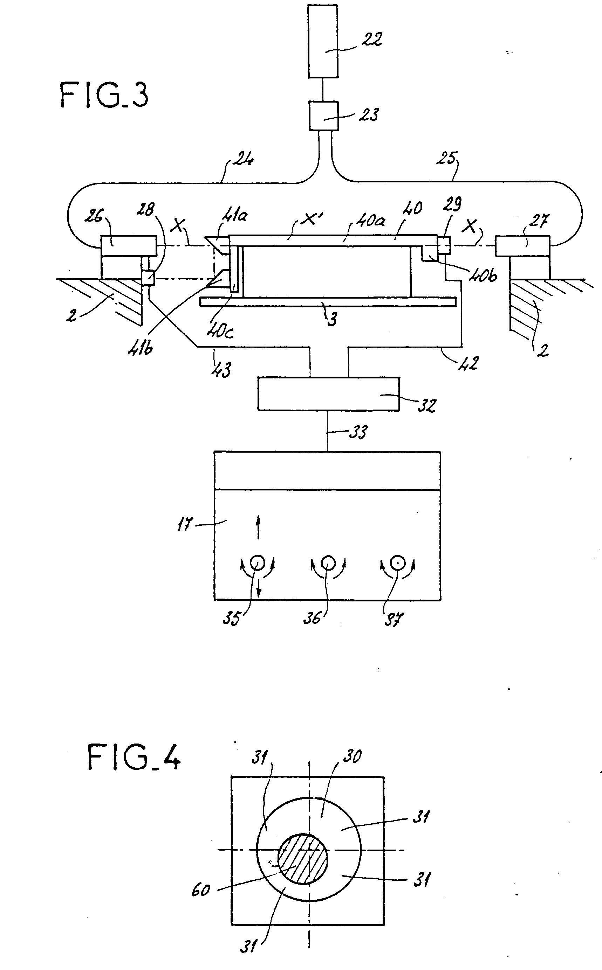

- un tableau (67) de commande, pour le positionnement de la table (3) d'une part, et pour le contrôle des outils d'alésage (5) et de surfaçage (12) d'autre part ; ce tableau (67) est plus précisément décrit par référence aux figures 2 et 3

- différents organes de commande manuelle en position de la table (3), et plus précisément une commande (18) manuelle de lacet autour de l'axe (Z), une commande manuelle (19) de roulis autour de l'axe (Y), une commande manuelle (20) de tanguage autour de l'axe (X), et enfin une commande manuelle (21) de translation ou de réglage du niveau de la table (3), selon l'axe (Z).

Dans le cas de l'alésage des deux paliers de l'arbre à came, matérialisant la direction (X') coïncidant avec la ligne d'arbre, le système de visée laser représenté à la figure 2 comprend :

- une source (22) de lumière cohérente, un séparateur (23) du faisceau émis par la source (22) en deux faisceaux séparés, deux fibres optiques (24) et (25) de transport des deux faisceaux séparés

- deux émetteurs (26, 27) recevant les deux faisceaux séparés (24, 25) respectivement ; les émetteurs (26, 27) sont fixés sur le support (2) de part et d'autre de la table de maintien (3) ; ils sont alignés entre eux selon la direction d'avance (X) de l'outil d'alésage, et émettent deux faisceaux de lumière cohérente également alignés selon la direction (X)

- deux capteurs (28) et (29), opto-électroniques, disposés de manière amovible de part et d'autre de la culasse (1), en vis à vis des deux émetteurs (26) et (27) respectivement ; ces deux capteurs (28, 29) disposés dans les deux paliers extrêmes de la ligne d'arbre à cames, sont donc alignés selon l'axe d'alésage (X') ; comme représenté à la figure 4 de manière schématique, chaque capteur (28) ou (29) comporte un récepteur (30) sensible à l'image du faisceau de référence reçu, et divisé en secteurs, par exemple en quadrants (31), de telle manière que le capteur génère un signal électrique de mesure dont la valeur dépend de la position relative de l'image du faisceau de référence par rapport au récepteur (30), et plus précisément par rapport à son centre ; ainsi le signal de mesure transmis par chaque capteur (28) ou (29) varie ou est représentatif de l'orientation relative de l'axe d'alésage (X') par rapport à l'axe d'avance (X) de l'outil d'alésage.

- un système (32) de traitement des signaux de mesure reçu des capteurs (28, 29), générant un signal (33) de commande en position de la table (3) à partir du système d'orientation (4), permettant d'amener l'axe d'usinage (X') en coïncidence avec l'axe d'avance (X) de l'outil d'alésage, de manière manuelle ou automatique.

En effet, à partir du signal (33), si le dispositif d'orientation (4) de la table (3) comporte trois moteurs de déplacement ou orientation autour des trois axes (X, Y, Z), le signal de commande (33) est utilisé pour actionner les trois moteurs respectivement, selon la valeur du signal de commande, et amener ainsi l'axe (X') en coïncidence avec l'axe (X). Si le dispositif de positionnement (4) est à commande manuelle, comme représenté à la figure 1, le signal de commande (33) est utilisé pour visualiser sur le tableau (67) les corrections manuelles à apporter dans la position de la table, au moyen des volants (18 à 21), et amener ainsi manuellement l'axe d'alésage (X') en coïncidence avec l'axe d'avance (X) de l'outil d'alésage. Ainsi le tableau (67) comporte trois voyants (35 à 37), associés respectivement aux axes (Z, X et Y), s'allumant lorsqu'il y a coïncidence selon chacun de ces axes avec l'origine du trièdre de référence. Les flèches associées à chacun des voyants, lorsqu'elles s'allument, indiquent à l'opérateur la commande manuelle à actionner et dans quel sens.

Conformément à la figure 3, pour le surfaçage du plan du joint de la culasse, matérialisé par les axes (X') et (Y'), le système de visée laser demeure sensiblement le même, mais est mis en oeuvre selon des modalités différentes explicitées ci-après :

- un outillage amovible (40) de visée, comportant une plaque (40a) avec deux rebords (40b et 40c), est disposé sur la surface (1a) à rectifier ; cet outillage comporte de part et d'autre du bloc métallique (1), à savoir sur les rebords (40b) et (40c), respectivement le premier capteur (29) amovible, et un système optique (41) comportant deux miroirs (41a)et(41b) disposés à 90° l'un par rapport à l'autre ; le premier capteur (29) est dirigé dans l'axe d'alésage (X'), par conséquent dans le plan de surfaçage (X' Y'), et est en vis à vis de l'émetteur (27) ; par conséquent le capteur (29) génère un signal de mesure (42) représentatif de la position de l'axe (X') d'alésage par rapport à l'axe de référence (X) ; l'axe optique du premier miroir (41a) est aligné avec l'axe du premier capteur (29), à savoir l'axe (X') dans le plan de surfaçage (X'Y')

- le deuxième capteur amovible (28) est fixé sur le support (2), en vis-à-vis du deuxième miroir (41b), au dessous de l'émetteur (26) ; l'axe optique du deuxième miroir (41b) est aligné avec la direction de réception du capteur ; (28) dans ces conditions, le capteur (28 ) génère un signal de mesure réprésentatif de la position du plan de surfaçage (X' Y') autour de l'axe (X), par rapport au plan d'usinage (X Y), lorsque l'axe d'alésage (X') est déjà en coïncidence avec l'axe (X) d'avance de l'outil d'alésage

- le système de traitement (32) est agencé ou programmé de manière différente, c'est à dire pour traiter les deux signaux de mesure (42, 43) émis par le capteur (29) et le capteur (28) respectivement, pour générer un signal de commande (33) pour l'orientation de la table de maintien (3), et amener le plan de surfaçage (X' Y') en coïncidence avec le plan d'usinage (X Y)

Selon la figure 3, on notera au passage que les deux émetteurs laser (26, 27) demeurent fixés comme précédemment sur le support (2), de part et d'autre de la table de maintien (3), et demeurent alignés pour émettre deux faisceaux de lumière cohérente, selon la direction (X). Par conséquent, en ce qui concerne les émetteurs, rien n'a été modifié pour passer de l'alésage au surfaçage.

Selon la figure 3, on constate que tout écart en position du plan (X'Y') par rapport au plan (X Y) déplace le faisceau réfléchi par le miroir (41b), et par conséquent l'image du faisceau émis par l'émetteur (26), par rapport au récepteur sensible du capteur (28). Dans ces conditions, le signal de mesure transmis par le capteur (28) au système (32) est effectivement représentatif de la position du plan (X'Y'), une fois établie la coïncidence entre les axes (X) et (X').

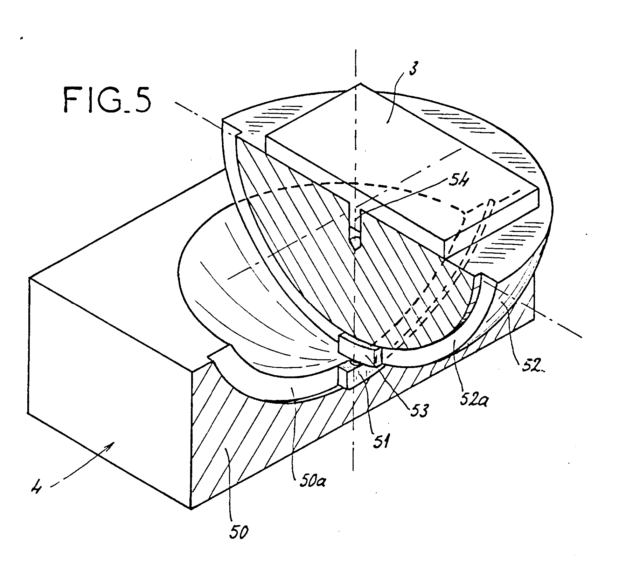

Pour terminer, conformément à la figure 5, on a représenté un dispositif (4) d'orientation de la table 3, selon les trois axes (X, Y, Z), lequel comprend :

- un berceau sphérique (50) comprenant une première glissière équatoriale (50a) dans laquelle est monté de manière glissante un premier coulisseau (51)

- une coque sphérique (52) comprenant une deuxième glissière équatoriale (52a), disposée de manière orthogonale à la première glissière (50a), dans laquelle est montée un deuxième coulisseau (53)

- le premier et le deuxième coulisseau (53) étant solidarisés l'un au-dessus de l'autre autour d'un axe commun de rotation, avec un écart fonctionnel entre les deux pour le passage de la coque (52)

- la table (3) étant montée en rotation sur la coque (52), autour d'un axe (54) passant par le centre de la sphère associée à celle-ci

- le berceau (50) étant mobile et ajustable en niveau ou hauteur, par des moyens non représentés

Le berceau (50) permet une orientation en tanguage autour de l'axe (X), la coque (52) une orientation en roulis autour de l'axe (Y), et l'axe (54) une orientation en lacet autour de l'axe (Z).

La présente invention n'est pas limitée à l'orientation décrite précédemment pour les référenciels (X, Y, Z) et (X', Y', Z'), et plaçant le plan de surfaçage (X', Y') horizontalement. D'autres orientations peuvent être retenues, pour placer par exemple le plan de surfaçage (X', Y') de manière verticale.

## Revendications

1. Machine pour usiner la culasse (1) d'un moteur thermique, permettant au moins d'aléser les deux paliers de l'arbre à came, selon un axe (X') d'alésage coïncidant avec la ligne d'arbre, ladite machine comprenant un support (2), un outil d'alésage (5) travaillant selon une ligne d'avance (X) constituée par l'axe de rotation de l'outil pendant l'alésage, fixée par construction par rapport au support (2), ainsi qu'une table (3) pour le maintien de la culasse, mobile par rapport au support de façon qu'elle soit susceptible d'amener l'axe (X') d'alésage en coïncidence avec la ligne d'avance de l'outil (X) d'alésage, **caractérisée en ce que** ladite machine intègre un système à visée optique, du type à visée laser, et à cet effet :

- deux émetteurs (26,27) sont fixés sur le support (2), de part et d'autre de la table (3) de maintien de la culasse, et sont disposés l'un en face de l'autre pour émettre deux faisceaux lumineux respectivement alignés selon la ligne (X) d'avance de l'outil d'alésage

- deux capteurs (28,29) amovibles sont agencés pour être disposés provisoirement, dans les deux paliers extrêmes respectivement, de part et d'autre de la culasse, en vis-à-vis des deux émetteurs respectivement, et sont alignés selon l'axe (X') d'alésage, les deux capteurs générant deux signaux électriques de mesure, dont la valeur de chacun dépend de la position relative de l'image du faisceau de référence reçu par rapport au centre d'un dit capteur, et donc de l'orientation relative de l'axe d'alésage (X') par rapport à la ligne (X) d'avance de l'outil d'alésage

- un système (32) de traitement des deux signaux de mesure, générant un signal (33) de commande en position de la table (3) de maintien de la culasse, pour amener l'axe d'alésage (X') en coïncidence avec la ligne d'avance (X) de l'outil d'alésage.

2. Machine selon la revendication 1, permettant également de surfacer le plan (1a) du joint de la culasse, selon un plan de surfaçage (X',Y') qui contient l'axe d'alésage (X'), caractérisée en ce qu'on prévoit :

- un outil de surfaçage pouvant être déplacé dans un plan d'usinage qui contient la ligne (X) d'avance de l'outil d'alésage, donc dans un plan d'usinage (X,Y)

- un outillage (40) amovible de visée est adapté à être disposé provisoirement sur le plan (1a) du joint de culasse et comporte de part et d'autre de la culasse (1), respectivement d'un côté le premier capteur (29) dirigé selon l'axe d'alésage (X'), en vis-à-vis de l'un (27) des émetteurs, générant un signal de mesure représentatif de la position de l'axe d'alésage (X') par rapport à la ligne (X) de l'outil d'alésage, et de l'autre côté deux miroirs (41a,41b) disposés à 90°, en vis-à-vis de l'autre émetteur (26), dont l'axe optique du premier est aligné avec l'axe (X') du premier capteur (29)

- le deuxième capteur amovible (28) est adapté à être fixé provisoirement sur le support (2), en vis-à-vis du deuxième miroir (41b), pour générer un signal de mesure représentatif de la position du plan de surfaçage (X',Y') autour de la ligne d'avance (X) de l'outil d'alésage, par rapport au plan d'usinage (X,Y)

- le système de traitement (32) permet de traiter les deux signaux (42,43) de mesure des deux capteurs respectivement, en générant un signal (33) de commande de la table de maintien (3), pour amener le plan de surfaçage (X',Y'), en coïncidence avec le plan de référence (X,Y).

3. Machine selon la revendication 1, comprenant un dispositif d'orientation de la table selon les trois axes, X, Y, Z, caractérisée en ce que le dispositif comprend un berceau sphérique (50), permettant une orientation en tanguage autour de la ligne (X), une coque sphérique (52) sur laquelle est montée la table (3), permettant une orientation en roulis autour de l'axe (Y), et en lacet autour de la ligne (Z), et on prévoit une pièce comprenant un premier (51) et un deuxième coulisseaux (53), disposés l'un au-dessus de l'autre à angle droit, avec un écart fonctionnel entre les deux pour le passage de la coque (52), le premier coulisseau (51) étant monté de manière glissante dans une première glissière équatoriale (50a) du berceau sphérique (50), et le second coulisseau (53) étant monté de manière glissante dans une deuxième glissière équatoriale (52a) de la coque sphérique (52).

**Patentansprüche**

1. Maschine zum Bearbeiten des Zylinderkopfes einer Wärme-kraftmaschine, welche Maschine es ermöglicht, wenigstens die beiden Lager der Nockenwelle in einer Bohrachse (X') auszubohren, die mit der Fluchtlinie der Lager übereinstimmt, wobei die Maschine ein Gestell (2), ein Bohrwerkzeug (5), das sich längs eines durch die beim Ausdrehen entstehende Drehachse des Werkzeuges gebildeten Vorschubweges (X) bewegt, der aufbaubedingt bezogen auf das Gestell (2) fixiert ist, sowie einen zum Halten des Zylinderkopfes vorgesehenen Tisch (3) umfaßt, der bezogen auf das Gestell derart bewegbar ist, daß er dazu geeignet ist, die Bohrachse (X') in Übereinstimmung mit dem Vorschubweg (X) des Bohrwerkzeuges zu bringen, dadurch gekennzeichnet, daß die Maschine ein optisches Visiersystem nach der Art eines Laservisieres aufweist und daß zu diesem Zweck:

- Zwei Sender (26, 27) auf dem Gestell (2) beidseits des Tisches (3) zum Halten des Zylinderkopfes fixiert und einander gegenüberliegend angeordnet sind, um zwei Lichtstrahlen zu emittieren, die jeweils fluchtend zu dem Vorschubweg (X) des Bohrwerkzeuges verlaufen;

- zwei transportable Meßwertaufnehmer (28, 29) dazu eingerichtet sind, jeweils vorübergehend in den beiden äußeren Lagern beidseits des Zylinderkopfes den beiden Sendern jeweils gegenüberliegend angeordnet zu werden, und die Meßwertaufnehmer zu der Bohrachse (X') fluchtend ausgerichtet sind, wobei die beiden Meßwertaufnehmer zwei elektrische Meßsignale erzeugen, deren jeweiliger Wert von der relativen Position des empfangenen Referenzstrahlbildes zu der Mitte eines Meßwertaufnehmers abhängt und damit von der relativen Ausrichtung der Bohrachse (X') zu dem Vorschubweg (X) des Bohrwerkzeuges; und daß

- ein Verarbeitungssystem (32) für die beiden Meßsignale vorgesehen ist, welches für den Tisch (3) zum Halten des Zylinderkopfes ein Lagesteuersignal (33) erzeugt, um die Bohrachse (X') in Übereinstimmung mit dem Vorschubweg (X) des Bohrwerkzeuges zu bringen.

2. Maschine nach Anspruch 1, welche es gleichfalls ermöglicht, die Fläche der Zylinderkopfdichtung (1a) in einer Oberflächenbehandlungsebene (X',Y') zu bearbeiten, welche die Bohrachse (X') enthält, dadurch gekennzeichnet, daß man vorsieht:

- Ein Oberflächenbehandlungswerkzeug, das in einer Bearbeitungsebene verfahren werden kann, in welcher der Vorschubweg (X) des Bohrwerkzeuges liegt, also in einer Bearbeitungsebene (X,Y);
- eine transportable Visiereinrichtung (40), die dazu eingerichtet ist, vorübergehend auf der Fläche (1a) der Zylinderkopfdichtung angeordnet zu werden und die beidseits des Zylinderkopfes (1) an der einen Seite gegenüber von einem Sender (27) den längs der Bohrachse (X') ausgerichteten Meßwertaufnehmer (29), der ein die Position der Bohrachse (X') zu dem Weg (X) des Bohrwerkzeuges repräsentierendes Meßsignal erzeugt, und an der anderen Seite zwei Spiegel (41a, 41b) trägt, die unter 90° gegenüber von dem anderen Sender (26) angeordnet sind, wobei die optische Achse des ersten Spiegels mit der Achse (X') des ersten Meßwertaufnehmers (29) fluchtend verläuft;
- der zweite transportable Meßwertaufnehmer (28) ist dabei dazu eingerichtet, vorübergehend an dem Gestell (2) gegenüber von dem zweiten Spiegel (41b) befestigt zu werden, um ein Meßsignal zu erzeugen, das die Position der Oberflächenbearbeitungsebene (X',Y') um den Vorschubweg (X) des Bohrwerkzeuges herum bezogen auf die Bearbeitungsebene (X,Y) repräsentiert, und
- das Verarbeitungssystem (32) erlaubt es, die beiden Meßsignale der beiden Meßwertaufnehmer zu verarbeiten und ein Steuersignal (33) für den Haltetisch (3) zu erzeugen, um die Oberflächenbehandlungsebene (X',Y') in Übereinstimmung mit der Referenzebene (X,Y) zu bringen.

3. Maschine nach Anspruch 1, mit einer Vorrichtung zur Ausrichtung des Tisches in den drei Achsen X, Y, Z, dadurch gekennzeichnet, daß die Vorrichtung einen kugelförmigen Tragschlitten (50), der eine Nickausrichtung um den Weg (X) ermöglicht, sowie eine Kugelschale (52) umfaßt, auf der der Tisch (3) montiert ist und die die Rollausrichtung um die Achse (Y) und ein Gieren um den Weg (Z) ermöglicht, und daß man ein Teil vorsieht, das ein erstes (52) und ein zweites Gleitstück (53) umfaßt, die beide im rechten Winkel übereinander angeordnet sind mit einem funktionellen Abstand zwischen den beiden für den Durchtritt der Schale (52), wobei das erste Gleitstück (51) in verschiebbarer Weise an einer ersten äquatorialen Gleitschiene (50a) des kugelförmigen Tragschlittens montiert ist und das zweite Gleitstück (53) in verschiebbarer Weise an einer zweiten äquatorialen Gleitschiene (52a) der Kugelschale (52) montiert ist.

## Claims

1. Machine for machining the cylinder head (1) of a thermal engine, making it possible at least to bore the two bearings of the camshaft in a boring axis (X') coinciding with the shaft line, the said machine comprising a support (2), a boring tool (5) working in a line of advance (X) constituted by the axis of rotation of the tool during boring, fixed relative to the support (2) by virtue of the construction, and a table (3) for holding the cylinder head, movable relative to the support, in such a way that it is capable of bringing the boring axis (X') into coincidence with the line of advance of the boring tool (X), characterized in that the said machine incorporates an optical sighting system of the laser-sighting type, and for this purpose:

- two transmitters (26, 27) are fastened to the support (2) on either side of the table (3) for holding the cylinder head and are arranged opposite one another so as to transmit two light beams respectively aligned along the line (X) of advance of the boring tool,
- two removable sensors (28, 29) are designed to be arranged temporarily, in the two end bearings respectively, on either side of the cylinder head, opposite the two transmitters respectively, and are aligned on the boring axis (X'), the two sensors generating two electrical measurement signals, the value of each of which depends on the relative position of the image of the reference beam received in relation to the centre of a said sensor and therefore on the relative orientation of the boring axis (X') in relation to the line (X) of advance of the boring tool,
- a system (32) for processing the two measurement signals generating a signal (33) for the control of the position of the table (3) holding the cylinder head, in order to bring the boring axis (X') into coincidence with the line of advance (X) of the boring tool.

2. Machine according to Claim 1, making it possible also to face the parting plane (1a) of the cylinder head along a facing plane (X', Y') which contains the bore axis (X'), characterized in that there is provided:

- a facing tool capable of being displaced in a machining plane, includes the line of advance (X) of the boring tool, and therefore in a machining plane (X, Y),

- a removable sighting tool (40) is designed to be arranged temporarily on the cylinder-head parting plane (1a) and comprises on either side of the cylinder-head, respectively on one side, a first sensor (29) directed in the boring axis (X'), opposite one (27) of the transmitters, and generating a measurement signal representing the position of the boring axis (X') in relation to the line (X) of the boring tool and, on the other side, two mirrors (41a, 41b) which are arranged at 90°, opposite the other transmitter (26), and the optical axis of the first of which is aligned with the axis (X') of the first sensor (29),

- the second removable sensor (28) is designed to be fastened temporarily to the support (2), opposite the second mirror (41b), in order to generate a measurement signal representing the position of the facing plane (X'Y') about the line of advance (X) of the boring tool in relation to the machining plane (X, Y),

- the processing system (32) makes it possible to process the two measurement signals (42, 43) of the two sensors respectively, by generating a signal (33) for controlling the holding table (3), in order to bring the facing plane (X'Y') into coincidence with the reference plane (X, Y).

3. Machine according to Claim 1, comprising a device for the orientation of the table according to the three axes X, Y, Z, characterized in that the device comprises, a spherical cradle (50) allowing a pitch orientation about the line (X), a spherical shell (52) on which the table (3) is mounted and which allows a roll orientation about the axis (Y) and a yaw orientation about the line (Z), and there is provided a component comprising a first slide (51) and a second slide (53) which are arranged one above the other at right angles with a functional tolerance between the two for the passage of the shell (52), the first slide (51) being mounted slidably in a first equatorial slideway (50a) of the spherical cradle (50), and the second slide (53) being mounted slidably in a second equatorial slideway (52a) of the spherical shell (52).

FIG_1

FIG_2

FIG.3

FIG.4

FIG.5